# EUROPEAN PATENT SPECIFICATION

(11) **EP 3 273 031 B1**
(45) Date of publication and mention of the grant of the patent: **03.07.2019**
(21) Application number: 17182076.4
(22) Date of filing: 19.07.2017
(51) Int. Cl.: F02C 3/107, F02C 3/14, F02C 6/20, F02C 7/32, F01D 5/02

(54) **GAS TURBINE ENGINE SHAFT ARCHITECTURE AND ASSOCIATED METHOD OF DISASSEMBLY**
GASTURBINENMOTORWELLENARCHITEKTUR UND ZUGEHÖRIGES DEMONTAGEVERFAHREN
ÉLÉMENTS D'ARBRE DE MOTEUR À TURBINE À GAZ ET PROCÉDÉ DE DÉMONTAGE

(30) Priority: 19.07.2016 US 201662363955 P; 19.07.2016 US 201662363956 P; 19.07.2016 US 201662363952 P; 19.07.2016 US 201662363949 P; 19.07.2016 US 201662363947 P; 20.12.2016 US 201615384959; 17.01.2017 US 201715407423; 17.01.2017 US 201715407414; 17.01.2017 US 201715407445; 17.01.2017 US 201715407439
(43) Date of publication of application: 24.01.2018
(73) Proprietor: Pratt & Whitney Canada Corp., Longueuil, Québec J4G 1A1 (CA)
(72) Inventor: LEFEBVRE, Guy, Longueuil, Québec J4G 1A1 (CA); PIETROBON, John, Longueuil, Québec J4G 1A1 (CA)
(74) Representative: Dehns

(56) References cited:
- EP-A2- 1 908 938
- WO-A2-2015/122948
- US-A- 4 611 464
- US-A1- 2014 252 160

## Description

### TECHNICAL FIELD

The application relates generally to gas turbine engines and, more particularly, to a shaft architecture and an associated method of disassembly.

### BACKGROUND OF THE ART

Engine component inspections, such as hot section inspections (HSI), are conducted at periodic intervals. Such inspections may be difficult and time consuming even if the engine architecture does facilitate disassembly.

There is, thus, a need for improvement.

US 2014/252160 A1 discloses a prior art boosted reverse flow gas turbine engine as set forth in the preamble of claim 1.

EP 1 908 938 A2 discloses a prior art gas turbine engine shaft assembly.

WO 2015/122948 A2 discloses a prior art gas turbine engine with intercoolers and recuperators.

### SUMMARY

In one aspect, there is provided a boosted reverse flow gas turbine engine as recited in claim 1.

In an embodiment of the above, the boosted reverse flow gas turbine engine may further comprise a hollow propeller shaft coaxial to the hollow LP turbine shaft and drivingly connected thereto. The LP compressor drive shaft may be axially insertable/removable through the hollow LP turbine shaft and the hollow propeller shaft.

In an embodiment of any of the above, the hollow propeller shaft may be drivingly connected to the hollow LP turbine shaft via a reduction gearbox (RGB). The hollow propeller shaft may extend forwardly from the RGB.

In an embodiment of any of the above, the hollow propeller shaft and the hollow LP turbine shaft may be coaxial and may jointly define a central passage along the engine axis. The LP compressor drive shaft may be axially movable through said central passage.

In an embodiment of any of the above, a retaining nut may be threadably engaged with a forward end of the hollow LP turbine shaft to prevent axial withdrawal of the LP compressor drive shaft from the hollow LP turbine shaft,

In an embodiment of any of the above, the engine may comprise a propeller shaft coaxial to the hollow LP turbine shaft and drivingly coupled thereto. The propeller shaft may extend forward of the hollow power turbine shaft. The retaining nut may be accessible via a central passage extending axially through the hollow propeller shaft.

In an embodiment of any of the above, the LP compressor drive shaft may be drivingly coupled to the LP turbine and the LP compressor via axially extending splines.

In an embodiment of any of the above, the HP spool may comprise an HP turbine, an HP compressor and an HP shaft drivingly connecting the HP turbine to the HP compressor. The HP compressor may be disposed forward of the LP compressor and in fluid communication therewith. The HP turbine may be disposed aft of the LP turbine and in fluid communication therewith.

In a further aspect, there is provided a method of removing a shaft from a boosted reverse flow gas turbine engine as recited in claim 9.

In an embodiment of any of the above, axially unlocking may comprise accessing, via the axially extending passage, a retaining nut and untightening the retaining nut.

In an embodiment of any of the above, the LP turbine may have a hollow LP turbine shaft coaxial to the propeller shaft and drivingly coupled thereto. The LP compressor drive shaft may be received in said LP turbine shaft. Untightening the retaining nut may comprise untightening the retaining nut from a distal end of the LP turbine shaft.

In an embodiment of any of the above, the LP compressor drive shaft is axially unlocked from the LP turbine.

In an embodiment of any of the above, a method of conducting a hot section inspection (HSI) may comprise: detaching a power section module of the boosted reverse flow gas turbine engine from a remainder of the engine after having removed the LP compressor drive shaft from the engine using any of the above methods, and then inspecting hot engine components.

### DESCRIPTION OF THE DRAWINGS

Reference is now made to the accompanying figures in which:
Fig. 1 is a schematic cross-section view of a boosted reverse flow engine;
Fig. 2 is a longitudinal cross-section view of a removable low pressure (LP) compressor drive shaft of the engine shown in Fig. 1;
Fig. 3 is an enlarged cross-section view illustrating how the LP compressor drive shaft is drivingly coupled via axially extending splines to an LP turbine shaft drivingly connected to an LP turbine of the engine shown in Fig. 1; and
Fig. 4 is an enlarged cross-section view illustrating a spline connection for drivingly coupling the LP compressor drive shaft to an LP compressor via a boost gear train shown at the right hand side of Fig. 1.

### DETAILED DESCRIPTION

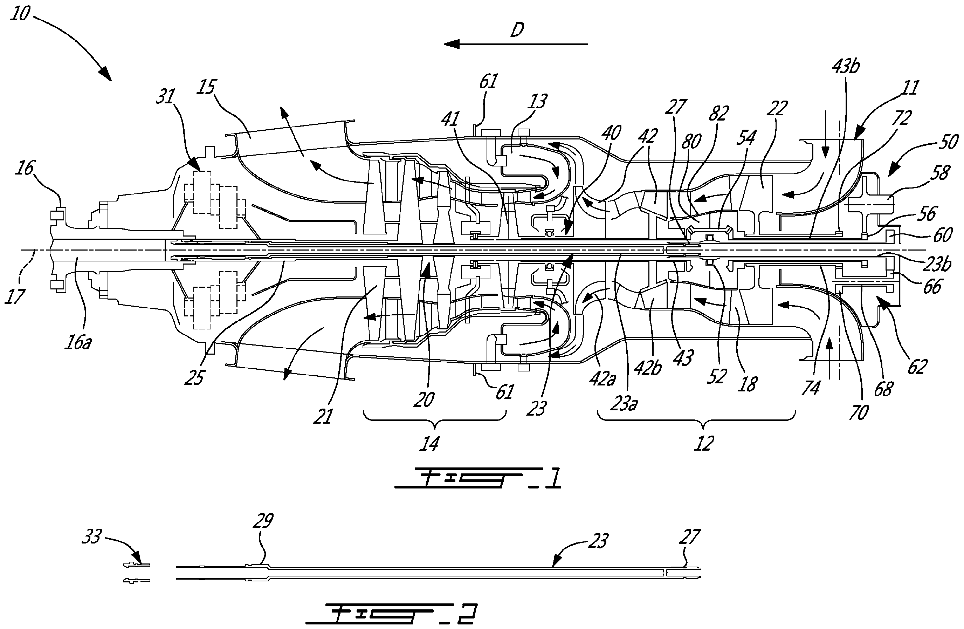

Fig. 1 illustrates a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust outlet 15 through which the combustion gases exit the engine 10. The engine 10 further has a drive output shaft 16 having a front end configured to drive a rotatable load (not shown). The rotatable load can, for instance, take the form of a propeller or a rotor, such as a helicopter main rotor. Depending on the intended use, the engine 10 can be configured as a turboprop engine or a turboshaft engine. Fig. 1 illustrates a turboprop configuration. In Fig. 1, the drive output shaft is, thus, a propeller shaft. The gas turbine engine 10 has a centerline or engine axis 17 about which the compressor and turbine rotors rotate.

The gas turbine engine 10 has an axially extending central core which defines a gaspath 18 through which gases flow, as depicted by flow arrows in Fig. 1. The exemplary embodiment shown in Fig. 1 is a "reverse-flow" engine because gases flow through the gaspath 18 from the air inlet 11 at a rear portion thereof, to the exhaust outlet 15 at a front portion thereof. This is in contrast to "through-flow" gas turbine engines in which gases flow through the core of the engine from a front portion to a rear portion. The direction of the flow of gases through the gaspath 18 of the engine 10 disclosed herein can be better appreciated by considering that the gases flow through the gaspath 18 in the same direction D as the one along which an aircraft engine travels during flight. Stated differently, in the non-limitative example shown in Fig. 1, gases flow through the engine 10 from a rear end thereof towards the propeller shaft 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to output shaft 16 (e.g. closer to the propeller in a turboprop application). Similarly, a component of the engine 10 that is "aft" of another component is arranged within the engine 10 such that it is further away from the output shaft 16.

Still referring to Fig. 1, the engine 10 has multiple spools which perform compression to pressurize the air received through the air inlet 11, and which extract energy from the combustion gases before they exit the gaspath 18 via the exhaust outlet 15. More particularly, the illustrated embodiment comprises a low pressure (LP) spool 20 and a high pressure (HP) spool 40 mounted for rotation about the engine axis 17. The LP and HP spools 20, 40 are independently rotatable about the axis 17. The term "spool" is herein intended to broadly refer to drivingly interconnected rotors such as turbine and compressor rotors and is, thus, not limited to a single shaft compressor/rotor assembly. For instance, as will be seen herein after, it is intended to include a low pressure turbine which is drivingly connected to a geared low pressure compressor.

The LP spool 20 includes at least one component to compress the air that is part of the compressor section 12, and at least one component to extract energy from the combustion gases that is part of the turbine section 14. More particularly, the LP spool 20 has an LP turbine 21, also known as a power turbine, which may include different number of stages (three stages in the illustrated embodiment), and which drives an LP compressor 22 (also referred to as a boost). The LP turbine 21 drives the LP compressor 22, thereby causing the LP compressor 22 to pressurize incoming air from the air inlet 11. The LP compressor 22 is disposed just forward of the air inlet 11. Both the LP turbine 21 and the LP compressor 22 are disposed along the engine axis 17. In the depicted embodiment, both the LP turbine 21 and the LP compressor 22 include rotatable components having an axis of rotation that is coaxial with the engine axis 17. It is understood that they may include one or more stages depending upon the desired engine thermodynamic cycle.

For a reverse flow engine, the LP turbine 21 is forward of the LP compressor 22. The LP turbine 21 is also aft of the exhaust outlet 15. The LP compressor 22 is forward of the air inlet 11. This arrangement of the LP turbine 21 and the LP compressor 22 provides for a reverse-flow engine 10 that has one or more LP compressor stages located at the rear of the engine 10, and which are driven by one or more low pressure turbine stages located at the front of the engine 10.

The LP spool 20 further comprises an LP compressor drive shaft 23 coaxial with engine axis 17. The LP turbine 21 is drivingly coupled to the LP compressor drive shaft 23. The LP compressor drive shaft 23 allows the LP turbine 21 to drive the LP compressor 22 during operation of the engine 10. As will be discussed in greater details hereinbelow, the LP compressor drive shaft 23 may be drivingly coupled to the LP compressor 22 via a gear train 62, thereby allowing the LP compressor 22 to run at a different rotational speed from the LP turbine 21. This can provide more flexibility in the selection of design points for the LP compressor 22 while at the same time allowing to drivingly connect an axially mounted accessory gear box (AGB) 50 to the HP spool 40 centrally through the LP compressor 22, thereby minimizing the engine envelope in a direction radial from the engine axis 17 as compared to conventional boosted engine with side-mounted AGBs (AGBs mounted on a radially outer surface of the engine envelope) driven via a tower shaft.

Still referring to Fig. 1, it can be appreciated that a hollow power turbine or LP turbine shaft 25 extends forwardly from the LP turbine 21 for driving the propeller shaft 16. The LP turbine shaft 25 is coaxial to the engine axis 17 and is drivingly connected to the propeller shaft 16 via a suitable reduction gear box (RGB) 31. A rotatable load, a propeller (not shown) according to the illustrated example, is connectable to a front end of the propeller shaft 16. In this way, the LP turbine 21 can be used to drive the propeller at a reduced speed relative to the speed of the LP turbine 21. In such a configuration, during operation of the engine 10, the LP turbine 21 drives the rotatable load such that a rotational drive produced by the LP turbine 21 is transferred to the rotatable load via the LP turbine shaft 25, the RGB 31 and output shaft 16 coming out forwardly from the RGB 31.

The RGB 31 processes and outputs the rotational drive transferred thereto from the LP turbine 21 via the LP turbine shaft 25 through known gear reduction techniques. The RGB 31 allows for the load (e.g. the propeller according to the illustrated turboprop example) to be driven at its optimal rotational speed, which is different from the rotational speed of the LP turbine 21. The RGB 31 is axially mounted at the front end of the engine 10. The RGB 31 has an input and an output axis parallel (coaxial in the illustrated embodiment) to the engine axis 17.

In an alternate embodiment where the engine 10 is a turboshaft, the rotational load (which may include, but is not limited to, helicopter main rotor(s) and/or tail rotor(s), propeller(s) for a tilt-rotor aircraft, pump(s), generator(s), gas compressor(s), marine propeller(s), etc.) is driven by the LP turbine 21 via the RGB 31, or the RGB 31 may be omitted such that the output of the engine 10 is provided directly by the LP turbine shaft 25.

The LP compressor drive shaft 23 and the LP turbine shaft 25 (extending respectively aft and forward of the LP turbine 21) provide the engine 10 with bidirectional drive. Modularity criteria for gas turbine engines motivates the use of distinct shafts in opposed axial directions from the LP turbine 21. The LP compressor drive shaft 23 and the LP turbine shaft 25 may be directly or indirectly connected together. Whether directly or indirectly connected the LP compressor drive shaft 23 and the LP turbine shaft 25 provide rotational outputs at opposed end of the engine. The LP turbine shaft 25 provides a rotational drive output at the front end of the engine 10 while the LP compressor drive shaft 23 provides a rotational drive output at the rear end of the engine 10. As shown in Fig. 1, the LP turbine shaft 25 can be integral to the LP turbine 21. However, the LP compressor drive shaft 23 is provided as a removable shaft to facilitate on-wing hot section inspection (HSI). As will be seen hereinafter, the power transmitting shaft architecture of the engine is designed to allow the LP compressor drive shaft 23 to be axially removable from the engine 10 through the center of the LP turbine shaft 25 and the propeller shaft 16.

In light of the preceding, it can be appreciated that the LP turbine 21 drives both the rotatable load (e.g. the propeller) and the LP compressor 22. Furthermore, the rotatable load, when mounted to the engine 10, and the LP compressor 22 are disposed on opposite ends of the LP turbine 21. It can thus be appreciated that one or more low pressure turbine stages are used to drive elements in front of the LP turbine (e.g. propeller, RGB 31, etc.) as well as to drive elements to the rear of the LP turbine (e.g. LP compressor 22). This configuration of the LP turbine 21 allows it to simultaneously drive the rotatable load and the LP compressor 22.

Referring concurrently to Figs. 1 to 4, it can be appreciated that the LP compressor drive shaft 23 extends axially from an output end of the RBG 31, through the LP turbine shaft 25, the LP turbine 21, the HP spool 40 to a LP compressor cavity 80 on a downstream side of the LP compressor 22 where the LP compressor drive shaft 23 is drivingly coupled to an LP compressor gear train input shaft 23b via axially extending splines 27. The LP compressor gear train input shaft 23b extends centrally through the LP compressor 22 to a location aft of the LP compressor 22 for connection with a set of gears 62 which, in turn, provides a drive output to an LP compressor input shaft 74 extending integrally rearwardly from the LP compressor 22, as will be discussed in greater details herein below.

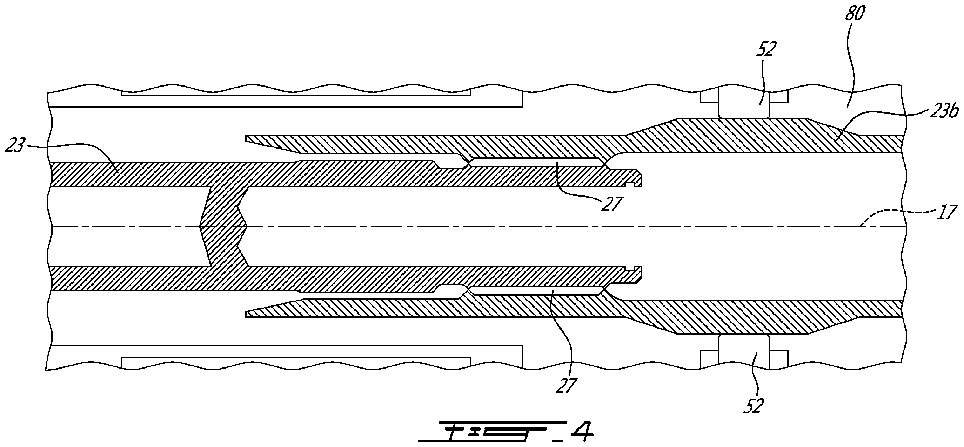

As shown in Fig. 4, the LP compressor drive shaft 23 may extend axially into LP compressor gear train input shaft 23b to provide a male/female spline coupling. However, other coupling arrangements allowing axial withdrawal of the LP compressor drive shaft 23 through the front end of the engine 10 are contemplated as well. According to a non-illustrated embodiment, the LP compressor drive shaft 23 could be directly coupled via axially oriented splines or the like to the LP compressor 22.

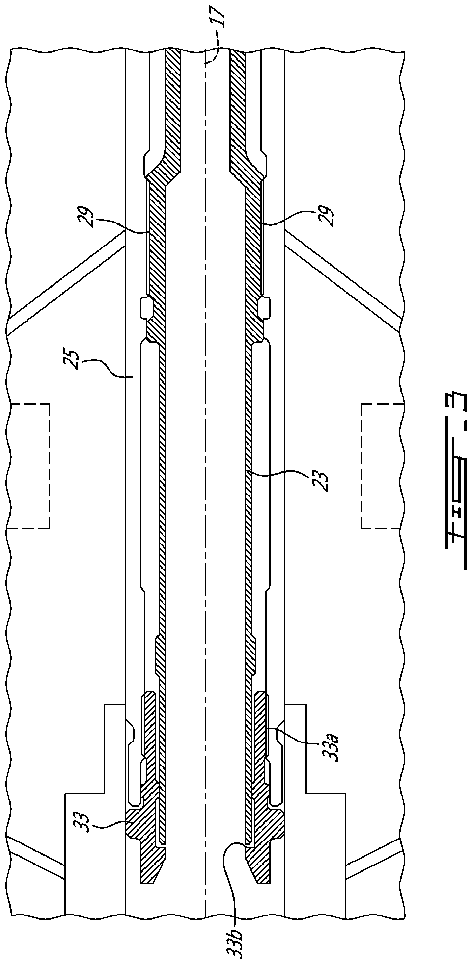

As shown in Fig. 3, the LP compressor drive shaft 23 is drivingly coupled to the LP turbine shaft 25 via axially extending splines 29. In this way, a driving torque can be transferred from the LP turbine 21 to the LP compressor 22. In the illustrated embodiment, axially extending teeth projecting from the outer surface of the LP compressor drive shaft 23 are in meshing engagement with a corresponding row of teeth projecting from the inner surface of the LP turbine shaft 25. A retaining nut 33 is threadably engaged with a corresponding inwardly threaded portion at a front distal end of the LP turbine shaft 25 for releasably preventing axial withdrawal of the LP compressor drive shaft 23 from the LP turbine shaft 25. The nut 33 has external threads 33a for engagement with corresponding internal threads on the LP turbine shaft 25. Withdrawal of the LP compressor drive shaft 23 is prevented by an inner annular flange 33b projecting radially inwardly from the nut 33 for axially blocking the passage of the LP compressor drive shaft 23 out of the LP turbine shaft 25. It is understood that nut 33 could be replaced by other suitable fasteners for selectively limiting axial movement of the LP compressor drive shaft 23 relative to the LP turbine 21 and the LP compressor 22.

Referring back to Fig. 1, the HP spool 40 has at least one component to compress the air that is part of the compressor section 12, and at least one component to extract energy from the combustion gases that is part of the turbine section 14. The HP spool 40 is also disposed along the engine axis 17 and includes a HP turbine 41 (also referred to as the compressor turbine) drivingly engaged (e.g. directly connected) to an HP compressor 42 by an HP shaft 43 surrounding the LP compressor drive shaft 23 and rotating independently with respect thereto. In the illustrated embodiment, the HP shaft 43 is a hollow shaft which rotates around the LP compressor drive shaft 23. That is the LP compressor drive shaft 23 extends axially through the HP shaft 43. The HP turbine 41 and the HP compressor 42 may include one or more stages of rotors, depending upon the desired engine thermodynamic cycle, for example. In the depicted embodiment, the HP compressor 42 includes a centrifugal compressor 42a or impeller and an axial compressor 42b, both of which are driven by the HP turbine 41. During operation of the engine 10, torque is transferred from HP turbine 41 to the HP compressor 42 via HP shaft 43.

In the exemplified reverse flow engine configuration, the HP turbine 41 is aft of the LP turbine 21, and forward of the combustor 13. The HP compressor 42 is aft of the combustor 13, and forward of the LP compressor 22. From this arrangement of the HP turbine 41 and the HP compressor 42, it can be appreciated that during operation of the engine 10, the LP compressor 22 driven by the LP turbine 21 feeds pressurized air to the HP compressor 42. Therefore, the pressurized air flow produced by the LP compressor 22 is provided to the HP compressor 42 and contributes to the work of both the LP turbine 21 and the HP turbine 41. This arrangement provides for a boosted reverse flow engine.

It can thus be appreciated that the presence of the above-described LP and HP spools 20, 40 provides the engine 10 with a "split compressor" arrangement. More particularly, some of the work required to compress the incoming air is transferred from the HP compressor 42 to the LP compressor 22. In other words, some of the compression work is transferred from the HP turbine 41 to the more efficient LP turbine 21. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature (sometimes referred to as "T4") for a given power. These factors can contribute to a lower overall weight for the engine 10. The transfer of compression work from the HP compressor 42 to the LP compressor 22 contrasts with some conventional reverse-flow engines, in which the high pressure compressor (and thus the high pressure turbine) perform all of the compression work.

In light of the preceding, it can be appreciated that the LP turbine 21 is the "low-speed" and "low pressure" turbine section when compared to the HP turbine 41. The LP turbine 21 is sometimes referred to as the "power turbine". The turbine rotors of the HP turbine 41 spin at a higher rotational speed than the turbine rotors of the LP turbine 21 given the closer proximity of the HP turbine 41 to the outlet of the combustor 13. Consequently, the compressor rotors of the HP compressor 42 may rotate at a higher rotational speed than the compressor rotors of the LP compressor 22.

The HP turbine 41 and the HP compressor 42 can have any suitable mechanical arrangement to achieve the above-described split compressor functionality. For example, and as shown in Fig. 1, the HP shaft 43 extends concentrically about the LP compressor drive shaft 23 and is independently rotatable relative thereto. The relative rotation between the HP shaft 43 and the LP compressor drive shaft 23 allow the shafts 23, 43 to rotate at different rotational speeds, thereby allowing the HP compressor 42 and the LP compressor 22 to rotate at different rotational speeds. The HP shaft 43 can be mechanically supported by the LP compressor drive shaft 23 using bearings (or the like) or be independently supported from one another.

The engine 10 is periodically inspected to identify worn parts. For instance, hot section inspections (HSI) are periodically performed. At least some of the characteristics of the above described LP shaft architecture may facilitate the assembly and disassembly of the power section from the engine to permit replacement or inspection of hot section components. For instance, for a turboprop engine incorporating the above described LP compressor drive shaft construction, an HSI procedure may be facilitated by removing the LP compressor drive shaft 23. To do so, the propeller (not shown) is first removed from the propeller shaft 16. According to one embodiment, removing the propeller may include removing a center plug 16a from the central passage extending axially through the propeller shaft 16 to provide access to the LP compressor drive shaft 23, which is coaxial to the propeller shaft 16. The LP compressor drive shaft 23 may then be axially "unlock" or "free" to permit subsequent withdrawal thereof through the propeller shaft 16. According to the illustrated exemplary embodiment, axially unlocking the LP compressor drive shaft 23 comprises untightening retaining nut 33 and removing it from the LP turbine shaft 25 via the axially extending passage of the propeller shaft 16. Once the retaining nut 33 has been removed from the engine via the passage in the propeller shaft 16, the LP compressor drive shaft 23 can be axially extracted centrally through the propeller shaft 16. The LP compressor drive shaft 23 is uncoupled from the LP compressor 22 and the LP turbine 21 by axially pulling on the shaft 23 so as to cause the axially extending splines 27, 29 at opposed ends of shaft 23 to come out of engagement with the mating splines of the LP turbine shaft 25 and the boost gear shaft 23b. Thereafter, the power section module, including the LP turbine 21, the exhaust case 15, the RGB 31 and the propeller shaft 16 can be detached from the remainder of the engine at flange 61. For wing mounted engines, a crane and harness arrangement is typically used to remove the power section module. The remainder modules of the engine remain attached to the aircraft wing, thereby allowing for on-wing inspection of the engine. The removal of the LP compressor drive shaft 23 prior to disassembly of the power section module from the engine facilitate the disassembly operation as compared to engines having non-removable shafts, which remain attached to the engine cold sections (e.g. the LP compressor) when the hot power section modules are removed.

Still referring to the embodiment shown in Fig. 1, the engine 10 may also include an accessory gearbox (AGB) 50. The AGB 50 receives a rotational input from the HP spool 40 and, in turn, drives accessories (e.g. fuel pump, starter-generator, oil pump, scavenge pump, etc.) that contribute to the functionality of the engine 10. The AGB 50 can be designed with side-facing accessories, top-facing accessories, or rear-facing accessories depending on the installation needs.

According to the illustrated embodiment, the AGB 50 is concentrically mounted axially aft of the LP compressor 22 as an axial extension of the engine envelope. The axial positioning of the AGB 50 allows minimizing the overall radial envelope of the engine as compared to a split compressor or boosted engine having the AGB mounted on a radially outer surface of the engine envelope and connected to the HP spool via a tower shaft. In the illustrated embodiment, the AGB 50 is accommodated within the envelope of the engine in a plane normal to the central axis 17.

In the illustrated embodiment, the AGB input drive axis is coaxial to the LP compressor centerline and, thus, the engine axis 17. By so aligning the input axis of the AGB 50 relative to the LP compressor centerline, the drive input to the AGB 50 can be provided centrally through the LP compressor 22, thereby eliminating the need for a tower shaft and an externally mounted gear arrangement. However, unlike conventional reverse flow engines (like the well-known PT6 engine manufactured by Pratt & Whitney Canada), which do not include a compressor boost, the presence of the LP compressor 22 axially between the HP compressor 42 and the AGB 50 physically interferes with the connection of the AGB 50 with the HP spool 40, which is disposed on the opposed axially facing side of the LP compressor 22. In the illustrated embodiment, this particular problem is overcome by extending the HP shaft 43 through a central bore or passage in the LP compressor 22. The HP shaft 43 thus provides a drive input to the AGB 50 coaxial to the engine axis 17. According to the embodiment illustrated in Figs. 1-3, the HP shaft 43 is segmented between the HP compressor 42 and the LP compressor 22 to allow for the introduction of a bearing 52 to provide support to the LP shaft 23 between the HP compressor 42 and the LP compressor 22. A gear 54 is provided to drivingly couple the HP shaft 43 to an AGB drive input shaft 43b, which may also be viewed as being an extension (i.e. a segment) of the HP shaft 43. The gear 54 may be provided in the form of a bevel gear having a 1:1 speed ratio. The bevel gear may be set to have a rotation axis perpendicular to the rotation axis of the HP shaft 43. Such a gear arrangement allows for the installation of a support and bearing structure for supporting the LP compressor drive shaft 23. Such a support may be suitable when the LP compressor drive shaft 23 is provided in the form of a one-piece shaft or in order to address specific shaft dynamic requirements.

The AGB input shaft 43b projects axially into the AGB 50 and is provided at a distal end thereof with a gear 56, which is in meshing engagement with an associated AGB output gear 58. In the illustrated example, the AGB output gear 58 has a rotation axis parallel to the engine axis 17. The output gear 58 is drivingly connected to accessories (not shown). It is understood that the accessories gear train in the AGB 50 can adopt various configurations, including multiple outputs and different gear ratios.

Referring to Fig. 1, it can be appreciated that the LP compressor or boost gear train 62 may be integrated to the AGB 50 to drivingly couple the LP compressor drive shaft 23 and, thus, the LP turbine 21 to the LP compressor 22. As mentioned herein above, the gear connection between the LP turbine 21 and the LP compressor 22 is advantageous in that it allows driving the LP compressor 22 at a different speed than the LP turbine 21. It can thus allow for overall thermodynamic cycle performance improvement.

The LP compressor gear train 62 comprises an input gear 60 provided at the distal end portion of input shaft 23b, the end portion which projects outwardly of the HP shaft 43. The input gear 60 is in meshing engagement with a second gear 66 mounted at an aft end of a transfer shaft 68 having a rotation axis parallel to the engine axis 17. A third gear 70 is provided at an opposed forward end of the transfer shaft 68 for meshing engagement with a fourth gear 72 provided at the distal end of the LP compressor input shaft 74. As shown in Fig. 1, the LP compressor input shaft 74 is a hollow shaft extending concentrically about the HP shaft 43, 43b. The LP compressor input shaft 74 ends at a location forward of the shaft 43b, to thereby allow the HP shaft 43 to be drivingly connected to gear 58. It can be appreciated that the relative lengths of shafts 23b, 43b, 74 projecting into the AGB 50 allows for the various gear connections (the innermost shaft having the deepest AGB penetration).

The boost gear train 62 can adopt various configurations and is, thus, not limited to the single gear train architecture shown in Figs. 1 and 2. For instance, the gear train 62 could be provided as a dual gear train to provide first and second drive inputs to the LP compressor 22. The dual gear train 62 could comprise first and second sets of gears provided on opposed lateral sides of the LP compressor gear train input shaft 23b and drivingly connected to the same input gear 60.

The positioning of the gear train 62 at the aft end of the engine in a common housing with the AGB 50 contributes to facilitate the engine assembly and eliminate the need for a separate casing and lubricating structure for the boost gear train 62. One containment and lubricating system can be used for both the AGB gears 56, 58 and the boost gear train 62. Such an integration of the AGB and the boost gear train in a common casing facilitates the access to the gears for adjustment purposes while minimizing part counts. However, it is understood that the boost gear train 62 could be provided as a separate unit on the AGB facing side of the LP compressor 22 and, thus, axially aft of the LP compressor 22 in a reverse flow engine configuration. The fact the boost gear train 62 has a drive input coaxial to the engine axis 17 also provides for a compact geared engine arrangement while at the same time contributing to ease the assembly process.

In the embodiment illustrated in Fig. 1, the case of the air inlet forms part of the AGB 50 and boost gear train 62 housing. However, it is understood that the AGB and the boost gear train 62 could be packaged as a stand-alone unit.

As can be appreciated from Fig. 1, the gear 54 and the bearing 52 are housed in an internal cavity 80 radially inwardly of the gaspath 18 between the HP compressor 42 and the LP compressor 22. The internal cavity 80 is bounded by the compressor inner gaspath wall 82. The internal cavity 80 communicates with the AGB 50 via the central bore extending axially through the LP compressor 22, thereby providing for a combined bearing/gear train oil chamber. Access to the gear 54 and bearing 52 may be provided by a split casing assembly including first and second separable casing sections having an interface axially between the HP compressor 42 and the LP compressor 22.

It can thus be appreciated that at least some of the embodiments of the engine 10 disclosed herein provide a mechanical architecture of turbomachinery that allows for a split compressor system in a compact PT6 type configuration. Such a split compressor engine in a reverse flow or through flow configuration may be used for aircraft nose installations, as well as for wing installations. The boost gear train 62 eliminates the need for a tower shaft for connecting the AGB 50 to the HP spool 40. Indeed, with this engine architecture, the HP shaft can be axially directly connected to the AGB, the AGB having an input axis coaxial to the engine axis 17. In this way no shaft has to be passed across the gaspath to drivingly connect the HP spool 40 to the AGB 50, thereby avoiding performances losses. The compressor aerodynamics can be improved by eliminating the service strut typically used to pass the tower shaft. The engine weight may be reduced by eliminating the need of an upstream transfer case. The position of the hardware used to build the gear trains may be designed for an optimal clearance from the LP rotor center. It can also be appreciated that at least some embodiments allow locating the AGB along the engine centerline aft of the LP compressor. This may provide installation benefits, reduce cost and weight relative to an externally mounted tower shaft driven AGB.

The above description is meant to be exemplary only, and one skilled in the art will recognize that changes may be made to the embodiments described without departing from the scope of the invention disclosed as defined by the appended claims.

## Claims

1. A boosted reverse flow gas turbine engine (10) comprising:
a low pressure (LP) spool (20) and a high pressure (HP) spool (40) rotatable independently of one another about an engine axis (17)
**characterised by**:
the LP spool (20) comprising an LP turbine (21), an LP compressor (22) disposed aft of the LP turbine (21) relative to a direction of travel (D) of the engine (10), an LP compressor drive shaft (23) drivingly connecting the LP turbine (21) to the LP compressor (22), and a hollow LP turbine shaft (25) projecting axially forward from the LP turbine (21) and drivingly connected thereto for driving a rotatable load, the LP compressor drive shaft (23) being coaxial to the hollow LP turbine shaft (25) and axially removable through the hollow LP turbine shaft (25).

2. The boosted reverse flow gas turbine engine (10) defined in claim 1, further comprising a hollow propeller shaft (16) coaxial to the hollow LP turbine shaft (25) and drivingly connected thereto, the LP compressor drive shaft (23) being axially insertable/removable through the hollow LP turbine shaft (25) and the hollow propeller shaft (16).

3. The boosted reverse flow gas turbine engine (10) defined in claim 2, wherein the hollow propeller shaft (16) is drivingly connected to the hollow LP turbine shaft (25) via a reduction gearbox (RGB) (31), the hollow propeller shaft (16) extending forwardly from the RGB (31).

4. The boosted reverse flow gas turbine engine (10) defined in claim 2 or 3, wherein the hollow propeller shaft (16) and the hollow LP turbine shaft (25) are coaxial and jointly define a central passage along the engine axis (17), the LP compressor drive shaft (23) being axially movable through said central passage.

5. The boosted reverse flow gas turbine engine (10) defined in any preceding claim, wherein a retaining nut (33) is threadably engaged with a forward end of the hollow LP turbine shaft (25) to prevent axial withdrawal of the LP compressor drive shaft (23) from the hollow LP turbine shaft (25).

6. The boosted reverse flow gas turbine engine (10) defined in claim 5, comprising a or the propeller shaft (16) coaxial to the hollow LP turbine shaft (25) and drivingly coupled thereto, the propeller shaft (16) extending forward of the hollow power turbine shaft (25), the retaining nut (33) being accessible via a central passage extending axially through the hollow propeller shaft (16).

7. The boosted reverse flow gas turbine engine (10) defined in any preceding claim, wherein the LP compressor drive shaft (23) is drivingly coupled to the LP turbine (21) and the LP compressor (22) via axially extending splines (27, 29).

8. The boosted reverse flow gas turbine engine (10) defined in any preceding claim, wherein the HP spool (40) comprises an HP turbine (41), an HP compressor (42) and an HP shaft (43) drivingly connecting the HP turbine (41) to the HP compressor (42), the HP compressor (42) disposed forward of the LP compressor (22) and in fluid communication therewith, the HP turbine (41) disposed aft of the LP turbine (21) and in fluid communication therewith.

9. A method of removing a shaft (23) from a boosted reverse flow gas turbine engine (10) having a low pressure (LP) compressor (22) drivingly coupled to an LP turbine (21) via an LP compressor drive shaft (23), the LP turbine (21) drivingly coupled to a propeller shaft (16) of a propeller, the method comprising:
removing the propeller from the propeller shaft (16), the propeller shaft (16) defining an axially extending passage providing access to the LP compressor drive shaft (23);
axially unlocking the LP compressor drive shaft (23); and
axially extracting the low pressure compressor drive shaft (23) through the axially extending passage of the propeller shaft (16).

10. The method defined in claim 9, wherein axially unlocking comprises accessing, via the axially extending passage, a retaining nut (33) and untightening the retaining nut (33).

11. The method defined in claim 10, wherein the LP turbine (21) has a hollow LP turbine shaft (25) coaxial to the propeller shaft (16) and drivingly coupled thereto, the LP compressor drive shaft (23) being received in said hollow LP turbine shaft (25), and untightening the retaining nut (33) comprises untightening the retaining nut (33) from a distal end of the LP turbine shaft (25).

12. The method defined in any one of claims 9 to 11, wherein the LP compressor drive shaft (23) is axially unlocked from the LP turbine (21).

13. A method of conducting a hot section inspection (HSI) comprising:
detaching a power section module of the boosted reverse flow gas turbine engine (10) from a remainder of the engine (10) after having removed the LP compressor drive shaft (23) from the engine (10) using the method defined in any of claims 9 to 12, and;
then inspecting hot engine components.

## Patentansprüche

1. Verstärkter Rückflussgasturbinenmotor (10), umfassend:
eine Niederdruck-(LP-)Spule (20) und eine Hochdruck-(HP-)Spule (40), die unabhängig voneinander um eine Motorachse (17) drehbar sind,
**dadurch gekennzeichnet, dass**:
die LP-Spule (20) eine LP-Turbine (21), einen LP-Verdichter (22), der hinter der LP-Turbine (21) relativ zu einer Bewegungsrichtung (D) des Motors (10) angeordnet ist, eine LP-Verdichterantriebswelle (23), die die LP-Turbine (21) antreibend mit dem LP-Verdichter (22) verbindet, und eine hohle LP-Turbinenwelle (25) umfasst, die axial von der LP-Turbine (21) nach vorne absteht und antreibend damit verbunden ist, um eine drehbare Last anzutreiben, wobei die LP-Verdichterantriebswelle (23) koaxial zu der hohlen LP-Turbinenwelle (25) und axial durch die hohle LP-Turbinenwelle (25) entfernbar ist.

2. Verstärkter Rückflussgasturbinenmotor (10) nach Anspruch 1, ferner umfassend eine hohle Propellerwelle (16), die koaxial zu der hohlen LP-Turbinenwelle (25) and antreibend damit verbunden ist, wobei die LP-Verdichterantriebswelle (23) axial durch die hohle LP-Turbinenwelle (25) und die hohle Propellerwelle (16) einsetzbar/entfernbar ist.

3. Verstärkter Rückflussgasturbinenmotor (10) nach Anspruch 2, wobei die hohle Propellerwelle (16) über ein Untersetzungsgetriebe (RGB) (31) antreibend mit der hohlen LP-Turbinenwelle (25) verbunden ist, wobei sich die hohle Propellerwelle (16) von dem RGB (31) nach vorne erstreckt.

4. Verstärkter Rückflussgasturbinenmotor (10) nach Anspruch 2 oder 3, wobei die hohle Propellerwelle (16) und die hohle LP-Turbinenwelle (25) koaxial sind und gemeinsam einen zentralen Durchlass entlang der Motorachse (17) definieren, wobei die LP-Verdichterantriebswelle (23) axial durch den zentralen Durchlass bewegbar ist.

5. Verstärkter Rückflussgasturbinenmotor (10) nach einem vorhergehenden Anspruch, wobei eine Haltemutter (33) verschraubbar mit einem vorderen Ende der hohlen LP-Turbinenwelle (25) in Eingriff genommen ist, um axialen Rückzug der LP-Verdichterantriebswelle (23) aus der hohlen LP-Turbinenwelle (25) zu verhindern.

6. Verstärkter Rückflussgasturbinenmotor (10) nach Anspruch 5, umfassend eine oder die Propellerwelle (16), die koaxial zu der hohlen LP-Turbinenwelle (25) und antreibend daran gekoppelt ist, wobei sich die Propellerwelle (16) vor der hohlen Leistungsturbinenwelle (25) erstreckt, wobei die Haltemutter (33) über einen zentralen Durchlass, der sich axial durch die hohle Propellerwelle (16) erstreckt, zugänglich ist.

7. Verstärkter Rückflussgasturbinenmotor (10) nach einem vorhergehenden Anspruch, wobei die LP-Verdichterantriebswelle (23) über sich axial erstreckende Keile (27, 29) antreibend an die LP-Turbine (21) und den LP-Verdichter (22) gekoppelt ist.

8. Verstärkter Rückflussgasturbinenmotor (10) nach einem vorhergehenden Anspruch, wobei die HP-Spule (40) eine HP-Turbine (41), einen HP-Verdichter (42) und eine HP-Welle (43) umfasst, die die HP-Turbine (41) antreibend mit dem HP-Verdichter (42) verbindet, wobei der HP-Verdichter (42) vor dem LP-Verdichter (22) angeordnet und in Fluidkommunikation damit ist, wobei die HP-Turbine (41) hinter der LP-Turbine (21) angeordnet und in Fluidkommunikation damit ist.

9. Verfahren zum Entfernen einer Welle (23) von einem verstärkten Rückflussgasturbinenmotor (10), der einen Niederdruck-(LP-)Verdichter (22) aufweist, der über eine LP-Verdichterantriebswelle (23) antreibend an eine LP-Turbine (21) gekoppelt ist, wobei die LP-Turbine (21) antreibend an eine Propellerwelle (16) eines Propellers gekoppelt ist, wobei das Verfahren Folgendes umfasst:
Entfernen des Propellers von der Propellerwelle (16), wobei die Propellerwelle (16) einen sich axial erstreckenden Durchlass definiert, der Zugriff auf die LP-Verdichterantriebswelle (23) bereitstellt;
axiales Entkoppeln der LP-Verdichterantriebswelle (23); und
axiales Entnehmen der Niederdruckverdichterantriebswelle (23) durch den sich axial erstreckenden Durchlass der Propellerwelle (16).

10. Verfahren nach Anspruch 9, wobei das axiale Entkoppeln das Zugreifen auf eine Haltemutter (33) über den sich axial erstreckenden Durchgang und das Lösen der Haltemutter (33) umfasst.

11. Verfahren nach Anspruch 10, wobei die LP-Turbine (21) eine hohle LP-Turbinenwelle (25) aufweist, die koaxial zu der Propellerwelle (16) und antreibend daran gekoppelt ist, wobei die LP-Verdichterantriebswelle (23) in der hohlen LP-Turbinenwelle (25) aufgenommen ist und das Lösen der Haltemutter (33) das Lösen der Haltemutter (33) von einem distalen Ende der LP-Turbinenwelle (25) umfasst.

12. Verfahren nach einem der Ansprüche 9 bis 11, wobei die LP-Verdichterantriebswelle (23) axial von der LP-Turbine (21) entkoppelt wird.

13. Verfahren zum Durchführen einer Heißabschnittsinspektion (HSI), umfassend:
Loslösen eines Leistungsabschnittsmoduls des verstärkten Rückflussgasturbinenmotors (10) von einem Rest des Motors (10), nachdem die LP-Verdichterantriebswelle (23) unter Anwendung des Verfahrens nach einem der Ansprüche 9 bis 12 von dem Motor (10) entfernt worden ist; und
dann Inspizieren von heißen Motorkomponenten.

## Revendications

1. Moteur à turbine à gaz à écoulement inverse renforcé (10) comprenant :
une bobine basse pression (BP) (20) et une bobine haute pression (HP) (40) pouvant tourner indépendamment l'une de l'autre autour d'un axe de moteur (17),
**caractérisé par** :
la bobine BP (20) comprenant une turbine BP (21), un compresseur BP (22) disposé à l'arrière de la turbine BP (21) par rapport à un sens de déplacement (D) du moteur (10), un arbre d'entraînement de compresseur BP (23) reliant par entraînement la turbine BP (21) au compresseur BP (22), et un arbre creux de turbine BP (25) faisant saillie axialement vers l'avant depuis la turbine BP (21) et relié par entraînement à celle-ci pour entraîner une charge rotative, l'arbre d'entraînement de compresseur BP (23) étant coaxial à l'arbre creux de turbine BP (25) et pouvant être retiré axialement à travers l'arbre creux de turbine BP (25).

2. Moteur à turbine à gaz à écoulement inverse renforcé (10) selon la revendication 1, comprenant en outre un arbre hélice creux (16) coaxial à l'arbre creux de turbine BP (25) et relié par entraînement à celui-ci, l'arbre d'entraînement de compresseur BP (23) pouvant être inséré/retiré axialement à travers l'arbre creux de turbine BP (25) et l'arbre hélice creux (16).

3. Moteur à turbine à gaz à écoulement inverse renforcé (10) selon la revendication 2, dans lequel l'arbre hélice creux (16) est relié par entraînement à l'arbre de turbine BP creux (25) par l'intermédiaire d'une boîte de réduction (RGB) (31), l'arbre hélice creux (16) s'étendant vers l'avant à partir de la RGB (31).

4. Moteur à turbine à gaz à écoulement inverse renforcé (10) selon la revendication 2 ou 3, dans lequel l'arbre hélice creux (16) et l'arbre creux de turbine BP (25) sont coaxiaux et définissent conjointement un passage central le long de l'axe de moteur (17), l'arbre d'entraînement de compresseur BP (23) pouvant être déplacé axialement à travers ledit passage central.

5. Moteur à turbine à gaz à écoulement inverse renforcé (10) selon une quelconque revendication précédente, dans lequel un écrou de retenue (33) vient en prise de manière filetée avec une extrémité avant de l'arbre creux de turbine BP (25) pour empêcher le retrait axial de l'arbre d'entraînement de compresseur BP (23) de l'arbre creux de turbine BP (25).

6. Moteur à turbine à gaz à écoulement inverse renforcé (10) selon la revendication 5, comprenant un ou l'arbre hélice (16) coaxial à l'arbre creux de turbine BP (25) et couplé par entraînement à celui-ci, l'arbre hélice (16) s'étendant vers l'avant de l'arbre creux de turbine de puissance (25), l'écrou de retenue (33) étant accessible par l'intermédiaire d'un passage central s'étendant axialement à travers l'arbre hélice creux (16).

7. Moteur à turbine à gaz à écoulement inverse renforcé (10) selon une quelconque revendication précédente, dans lequel l'arbre d'entraînement de compresseur BP (23) est couplé par entraînement à la turbine BP (21) et au compresseur BP (22) par l'intermédiaire de cannelures s'étendant axialement (27, 29).

8. Moteur à turbine à gaz à écoulement inverse renforcé (10) selon une quelconque revendication précédente, dans lequel la bobine HP (40) comprend une turbine HP (41), un compresseur HP (42) et un arbre HP (43) reliant par entraînement la turbine HP (41) au compresseur HP (42), le compresseur HP (42) étant disposé à l'avant du compresseur BP (22) et en communication fluidique avec celui-ci, la turbine HP (41) étant disposée à l'arrière de la turbine BP (21) et en communication fluidique avec celle-ci.

9. Procédé de retrait d'un arbre (23) d'un moteur à turbine à gaz à écoulement inverse renforcé (10) comportant un compresseur basse pression (BP) (22) couplé par entraînement à une turbine BP (21) par l'intermédiaire d'un arbre d'entraînement de compresseur BP (23), la turbine BP (21) étant couplée par entraînement à un arbre hélice (16) d'une hélice, le procédé comprenant :
le retrait de l'hélice de l'arbre hélice (16), l'arbre hélice (16) définissant un passage s'étendant axialement fournissant un accès à l'arbre d'entraînement de compresseur BP (23) ;
le déblocage axial de l'arbre d'entraînement de compresseur BP (23) ; et
l'extraction axiale de l'arbre d'entraînement de compresseur basse pression (23) à travers le passage s'étendant axialement de l'arbre hélice (16).

10. Procédé selon la revendication 9, dans lequel le déblocage axial comprend l'accès, par l'intermédiaire du passage s'étendant axialement, à un écrou de retenue (33) et le desserrage de l'écrou de retenue (33).

11. Procédé selon la revendication 10, dans lequel la turbine BP (21) comporte un arbre creux de turbine BP (25) coaxial à l'arbre hélice (16) et couplé par entraînement à celui-ci, l'arbre d'entraînement de compresseur BP (23) étant reçu dans ledit arbre creux de turbine BP (25), et le desserrage de l'écrou de retenue (33) comprend le desserrage de l'écrou de retenue (33) à partir d'une extrémité distale de l'arbre de turbine BP (25).

12. Procédé selon l'une quelconque des revendications 9 à 11, dans lequel l'arbre d'entraînement de compresseur BP (23) est débloqué axialement à partir de la turbine BP (21).

13. Procédé de réalisation d'une inspection de la section chaude (HSI) comprenant :
le détachement d'un module de section de puissance du moteur à turbine à gaz à écoulement inverse renforcé (10) du reste du moteur (10) après avoir retiré l'arbre d'entraînement de compresseur BP (23) du moteur (10) en utilisant le procédé défini selon l'une quelconque des revendications 9 à 12 ; et
puis l'inspection de composants chauds du moteur.
